# EUROPEAN PATENT APPLICATION

(11) **EP 3 828 408 A1**
(43) Date of publication of application: **02.06.2021**
(21) Application number: 19212523.5
(22) Date of filing: 29.11.2019
(51) Int. Cl.: F03D 7/04, F03D 7/02

(54) **A METHOD AND AN APPARATUS FOR COMPUTER-IMPLEMENTED MONITORING OF A WIND TURBINE**

(71) Applicant: Siemens Gamesa Renewable Energy A/S, 7330 Brande (DK)
(72) Inventor: Esbensen, Thomas, 7400 Herning (DK); Nielsen, Jesper Hjortshoej, 8260 Viby J (DK); Steffensen, Henrik, 8000 Århus (DK)
(74) Representative: Aspacher, Karl-Georg

(57) **Abstract**

The invention relates to a method for computer-implemented monitoring of a wind turbine (10) comprising an upper section (11) on top of a tower. The upper section (11) is pivotable around a vertical yaw axis (VA) and has a nacelle (12) and a rotor (13) with rotor blades, the rotor (13) being attached to the nacelle (12) and the rotor blades being rotatable by wind around a substantially horizontal rotor axis (HA). At each time point of one or more time points the following steps are performed during the operation of the wind turbine (10). In a step i) one or more operating parameters (OP) of the wind turbine (10) and/or one or more environmental parameters (WPP) are obtained, the operating parameters (OP) and/or environmental parameters (WPP) being current values determined by measurement with one or more sensors (14, 15) installed on and/or nearby the wind turbine (10) or determined by estimation. In a step ii) a speed prediction (SP) of the rotor (13) is determined ahead in time by processing the operating parameters (OP) and/or environmental parameters (WPP) by a trained data-driven model (MO), where the operating parameters (OP) and/or environmental parameters (WPP) are fed as a digital input to the trained data-driven model (MO) and the trained data-driven model (MO) provides the speed prediction (SP) as a digital output. Finally, in a step iii), one or more actuator signals (AS) are determined for controlling the wind turbine (10) by post-processing the speed prediction (SP) to prevent a predetermined speed event.

## Description

The invention relates to a method and an apparatus for computer-implemented monitoring of a wind turbine.

Wind turbines comprise an upper section with a rotor and a nacelle on the top of a tower, where the upper section can be rotated around a vertical yaw axis in order to vary the yaw angle of the wind turbine. The yaw angle of a wind turbine is usually adjusted such that the rotor of the wind turbine faces the wind. During normal wind turbine operation, a controller of the wind turbine aims to keep the rotational speed of the rotor and the generator, respectively, at a rotational speed reference which ensures that loads are within design limits, and to maintain rotor efficiency. In case of large disturbances, e.g. due to wind gust, grid drop, turbulence, etc., the performance of a speed reference tracking controller is reduced as it only monitors a current and a past speed error. This can result in over- and underspeed events, reduced annual energy production (AEP) and availability due to shutdowns of the wind turbine. The difficulty for the speed reference tracking controller lies in the fact that a trade-off of tuning controller gains for good speed reference tracking performance has to be made while minimizing actuator consumptions, structural loads of the wind turbine and acoustic noise emission.

It is an object of the invention to provide a method in order to improve a trade-off of tuning controller gains for good speed reference tracking performance and minimized actuator consumptions, structural loads, and acoustic noise emission.

This object is solved by the independent patent claims. Preferred embodiments of the invention are defined in the dependent claims.

The invention provides a method for computer-implemented monitoring of a wind turbine. The wind turbine comprises an upper section on top of a tower, the upper section being pivotable around a vertical yaw axis and having a nacelle and a rotor with rotor blades. The rotor is attached to the nacelle and the rotor blades are rotatable by wind around a substantially horizontal rotor axis. Actually, the rotor axis may be tilted a bit.

According to the method of the invention, the following steps i) to iii) are performed at each time point of one or more time points during the operation of the windfarm.

In step i), one or more operating parameters of the wind turbine and/or one or more environmental parameters are obtained. The term "obtained" or "obtaining" means that the operating parameters and/or environmental parameters are received by a processor implementing the method of the invention. The operating parameters and/or the environmental parameters are current values determined by measurement with one or more sensors installed on and/or nearby the wind turbine or determined by estimation. Alternatively or additionally, the operating parameters are controller signals and/or outputs, such as pitch reference or internal decisions. The environmental parameters are past and/or present values which are determined by measurement and/or estimation.

In step ii), a speed prediction of the rotor ahead in time by processing the operating parameters and/or environmental parameters is determined by a trained data-driven model, where the operating parameters and/or the environmental parameters are fed as a digital input to the trained data-driven model and the trained data-driven model provides the speed prediction as a digital output. The speed prediction may represent either a likelihood of exceedance of a speed threshold or the prediction of an absolute speed.

In step iii), one or more actuator signals for controlling the wind turbine are determined by post-processing the speed prediction to prevent a predetermined speed event.

The method of the invention provides an easy and straight forward method for determining a speed prediction some seconds ahead in time, such as one to five seconds. The speed prediction can be used in a controller to prevent over- and underspeed events. To do so, a trained data-driven model is used. This model is trained by training data comprising a plurality of operating parameters of the wind turbine, in particular of the upper section of the wind turbine, and/or environmental parameters for different situations, e.g., normal energy production of the wind turbine, grid drop, yaw error due to wind turbine direction misalignment, different wind conditions, soiled or icy blades or stall resulting in a drop of efficiency of the rotor as operating conditions. The training data may result from a simulation environment, such as turbine aeroelastic simulation environment like BHawC, or operational measurement data containing relevant features that is desired to represent typical operation conditions.

Any known data-driven model being learned by machine learning may be used in a method according to the invention. In a particularly preferred embodiment, the trained data-driven model is a neural network, preferably a recurrent neural Network, which is particularly suitable for processing operating parameters and environmental parameters. However, clustering techniques or regression may be used as well to determine the speed prediction some seconds ahead in time.

In a preferred embodiment of the invention, the operating parameters consist of one or more of the following parameters: rotor parameters, in particular rotor speed, rotor acceleration or rotor azimuth angle; rotor blade pitch parameters, in particular pitch angle, pitch speed; blade root moment; tower acceleration; nacelle acceleration; hub acceleration; produced power; and produced torque. Additional parameters may be used in addition.

In another particularly preferred embodiment, the environmental parameters consist of one or more of the following parameters: wind speed; wind direction; turbulence intensity; air density. Nevertheless, other operating parameters and/or wind parameters may be used as input data to the data-driven model as well.

In another particularly preferred embodiment, post-processing the speed prediction comprises verifying whether the speed prediction exceeds a certain threshold, wherein in case of exceeding the threshold compensating control actions for controlling the wind turbine are determined. In case the threshold is not exceeded, the actuator signal will not output correction values and/or a control signal.

In another particularly preferred embodiment, post-processing the speed prediction comprises continuously determining of control actions for controlling the wind turbine.

The control actions are provided to a controller of the wind turbine for actuating respective actuators.

As set out in the preferred embodiments above, the predicted speed (i.e. a speed prediction value) is used in a post-processing procedure designed to prevent over- and underspeed events, using available actuators. Different strategies for the wind event prevention may be used.

In a preferred embodiment, the actuator signal is adapted to control the wind turbine to produce the determined power to prevent over- and underspeed events. In a particular embodiment, a pitch angle control signal may be determined as actuator signal to control the pitch angle of the wind turbine.

Besides the above method, the invention refers to an apparatus for computer-implemented monitoring of a wind turbine, where the apparatus is configured to perform the method according to the invention or one or more preferred embodiments of the method according to the invention.

Moreover, the invention refers to a wind turbine, wherein the wind turbine comprises an apparatus according to the invention or one or more preferred embodiments thereof.

Furthermore, the invention refers to a computer program product with program code, which is stored on a non-transitory machine-readable carrier, for carrying out the method according to the invention or more or more preferred embodiments thereof when the program code is executed on a computer. Finally, the invention refers to a computer program with a program code for carrying out the method according to the invention or one or more preferred embodiments thereof when the program code is executed on the computer.

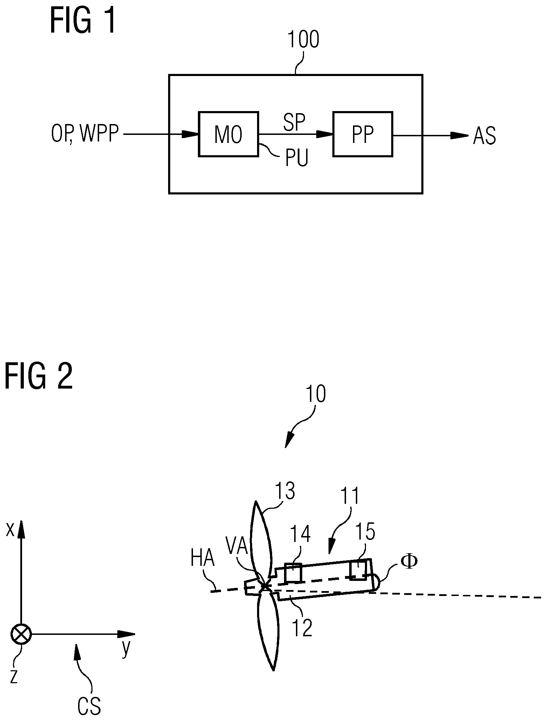

An embodiment of the invention will now be described in detail with respect to the accompanying drawing. Fig. 1 is a schematic illustration of a wind turbine comprising a controller for performing an embodiment of the invention.

Fig. 1 shows in the lower part a wind turbine 10. The wind turbine 10 may be part of a windfarm or may be a single turbine. The method described herein may be applied to a single wind turbine and to wind turbines in windfarms as well.

The wind turbine 10 is shown in a plan view from above. A 3D coordinate system CS for indicating the spatial arrangement of the wind turbine is part of Fig. 1. The vertical direction is indicated by the z-axis of the coordinate system CS whereas the directions parallel to the horizontal direction are indicated by the x-axis and y-axis of the coordinate system CS. The wind direction is along the y-axis of the coordinate system CS.

The wind turbine 10 comprises an upper section 11 being located on top of a tower (not shown) which extends in the vertical z-direction. The upper section comprises a nacelle 12 accommodating an electric generator for generating electricity. Furthermore, the upper section 11 comprises a rotor 13 having three rotor blades with an angle of 120° therebetween where Fig. 1 only shows two of those blades. The rotor 13 is rotated around the substantially horizontal rotor axis HA by wind resulting in the generation of electricity by the generator within the nacelle 12. The upper section 11 of the turbine 10 can be pivoted around the vertical yaw axis VA.

The yaw angle of the upper section 11 around the yaw axis VA is adjusted such that the rotor axis HA corresponds to the wind direction measured by a respective wind sensor 15 installed at or nearby the wind turbine 10. Besides the wind sensor 15, the turbine 10 is equipped with a number of not shown other sensors 14 for determining operating parameters OP, such as rotor values (rotor speed, rotor acceleration, rotor azimuth), blade pitch values (pitch angle, pitch speed), blade root moment, produced power and/or torque and tower/nacelle hub accelerations. The wind sensor 15 (which can consist of a number of different sensors) is adapted to determine environmental parameters WPP, such as wind speed, wind direction, turbulence intensity, air density and so on. In addition, further sensors may be provided to determine signals such as blade active addons positions, blade sensors such as air pressure and so on. Due to imprecise measurements of the sensors, a misalignment of the turbine may occur. For example, a yaw misalignment may occur which is indicated by the yaw misalignment angle θ in Fig. 1.

The wind turbine 10 is equipped with a controller which aims to keep the rotational speed of the rotor 13 at a rotational speed reference which ensures that loads acting on the wind turbine 10 are within design limits. Furthermore, the controller aims to maintain the rotor efficiency. In case of large disturbances, e.g. wind gust, grid drop, high turbulences of the wind, the performance of the speed reference tracking controller (not shown) is reduced as it only looks at the current and the past speed error. This can result in over- and underspeed events, reduced AEP and availability of the wind turbine due to shutdowns.

The method as described in the following provides an easy method to avoid these over- and underspeed events. To do so, the wind turbine 10 comprises the sensors 14 and 15 installed on and/or nearby the wind turbine. For example, the sensors 14, 15 may be installed on the nacelle 11. The sensors 14, 15 are adapted to measure the aforementioned operating parameters OP and environmental parameters WPP. The operating parameters OP and/or the environmental parameters WPP (in any combination or selection) are transferred by a suitable communication link to a controller 100 of the wind turbine 10. The controller 100 comprises a processing unit PU implementing a trained data-driven model MO receiving the operating parameters OP and/or the environmental parameters WPP as a digital input and providing a speed prediction (a speed prediction value) SP as a digital output.

In the embodiment described herein, the trained data-driven model MO is based on a neural network. However, clustering techniques and regression can be used to predict the speed prediction SP as well. The data-driven model MO is based on a neural network having been learned beforehand by training data. The training data comprise a plurality of operating parameters OP and/or environmental parameters WPP for different operating conditions of the wind turbine, such as normal production, grid drop, yaw error due to wind turbine direction misalignment, different wind conditions (wind speed variations including gust events and various turbulence levels, air density variations), soiled or icy blades and stall. Neural networks, clustering techniques and regression are well-known from the prior art and particularly suitable for processing operating parameters and/or environmental parameters WPP.

In the embodiment of Fig. 1, the speed prediction SP produced as an output of the model MO will be used in a post-processing procedure PP to prevent over- and underspeed events. By post-processing the speed prediction SP one or more actuator signals AS are determined which can be used for controlling or adapting control parameters of the wind turbine 10. For example, available actuators of the wind turbine 10, such as power and pitch, can be influenced. The post-processing can be carried out in different ways.

In a first embodiment, the post-processing procedure PP may compute proper compensating actuator actions to prevent or mitigate an unwanted speed event. This is based on the determination that the speed prediction SP exceeds a certain threshold defined before. In another embodiment, a continuous adjustment of the controller gain, based on the speed prediction SP, relative to a predetermined speed threshold (e.g. overspeed limit) may be made. In yet another embodiment, the likelihood of a rotor speed event may be determined with regard to exceeding a given threshold. The post-processing procedure PP then may compute proper compensating actuator actions to prevent or mitigate an unwanted speed event.

Actuator signals may be used as absolute values or modifications to existing control values. Potential actuator signals include, but are not limited to, pitch angle, produced power, produced torque, active blade addons, yaw angle, and so on.

The model MO can be continuously adjusted automatically or manually during the operation to enhance the speed prediction SP.

The invention as described in the forgoing has several advantages. It predicts an estimate some seconds ahead in time of rotor speed and reacts in due time to prevent over- and underspeed events of a wind turbine. The method provides a dynamic solution which applies control actions only when needed. This improves performance by increased AEP, increased availability, reduced load and acoustic noise emission.

By implementing the method according to the invention in a controller of a wind turbine, a more relaxed tuning of a speed reference tracking controller may be configured, reducing loads such as tower fore-aft, blade flap, pitch system wear, and so on. In addition, a reduced risk of speed events is the result which may cause increased loading, reduced AEP from lower availability, and higher acoustic noise emission.

The data-driven model may use a recurrent neural network as selected topology. Recurrent neural networks are well-suited for estimating time-series due to their internal structure. The data-driven model may be trained in an offline design phase, using simulation and/or field data covering the turbine operational modes. The data-driven model can also be trained and/or updated online.

## Claims

1. A method for computer-implemented monitoring of a wind turbine (10) comprising an upper section (11) on top of a tower, the upper section (11) being pivotable around a vertical yaw axis (VA) and having a nacelle (12) and a rotor (13) with rotor blades, the rotor (13) being attached to the nacelle (12) and the rotor blades being rotatable by wind around a substantially horizontal rotor axis (HA), wherein at each time point of one or more time points during the operation of the wind turbine (10) the following steps are performed:
i) obtaining one or more operating parameters (OP) of the wind turbine (10) and/or one or more environmental parameters (WPP), the operating parameters (OP) and/or environmental parameters (WPP) being current values determined by measurement with one or more sensors (14, 15) installed on and/or nearby the wind turbine (10) or determined by estimation;
ii) determining a speed prediction (SP) of the rotor (13) ahead in time by processing the operating parameters (OP) and/or environmental parameters (WPP) by a trained data-driven model (MO), where the operating parameters (OP) and/or environmental parameters (WPP) are fed as a digital input to the trained data-driven model (MO) and the trained data-driven model (MO) provides the speed prediction (SP) as a digital output;
iii) determining one or more actuator signals (AS) for controlling the wind turbine (10) by post-processing the speed prediction (SP) to prevent a predetermined speed event.

2. The method according to claim 1, wherein the trained data-driven model (MO) is a neural network, preferably a recurrent neural network, or a regression or a clustering technique.

3. The method according to claim 1 or 2, wherein the operating parameters (OP) consist of one or more of the following parameters:
- rotor parameters, in particular rotor speed, rotor acceleration or rotor azimuth angle;
- blade pitch parameters, in particular pitch angle, pitch speed;
- blade root moment;
- tower acceleration;
- nacelle acceleration;
- hub acceleration;
- produced power;
- produced torque.

4. The method according to one of the preceding claims,
wherein the environmental parameters (WPP) consist of one or more of the following parameters:
- wind speed;
- wind direction;
- turbulence intensity;
- air density.

5. The method according to one of the preceding claims,
wherein post-processing the speed prediction (SP) comprises verifying whether the speed prediction (SP) exceeds a certain threshold, wherein in case of exceeding the threshold compensating control actions for controlling the wind turbine (10) are determined.

6. The method according to one of the preceding claims,
wherein post-processing the speed prediction (SP) comprises continuously determining of control actions for controlling the wind turbine (10).

7. The method according to claims 5 or 6, wherein the control actions are provided to a controller of the wind turbine (10) for actuating respective actuators.

8. The method according to one of the preceding claims,
wherein the actuator signal is adapted to control the wind turbine (10) to produce a determined power.

9. The method according to one of the preceding claims,
wherein as actuator signal a pitch angle control signal is determined to control the pitch angle of the wind turbine (10) .

10. An apparatus for computer-implemented monitoring of a wind turbine (10) comprising an upper section (11) on top of a tower, the upper section (11) being pivotable around a vertical yaw axis (VA) and having a nacelle (12) and a rotor (13) with rotor blades, the rotor (13) being attached to the nacelle (12) and the rotor blades being rotatable by wind around a substantially horizontal rotor axis (HA), wherein the apparatus comprises a processor configured to perform at each time point of one or more time points during the operation of the wind turbine (10) the following steps:
i) obtaining one or more operating parameters (OP) of the wind turbine (10) and/or one or more environmental parameters (WPP), the operating parameters (OP) and/or environmental parameters (WPP) being current values determined by measurement with one or more sensors (14, 15) installed on and/or nearby the wind turbine (10) or determined by estimation;
ii) determining a speed prediction (SP) of the rotor (13) ahead in time by processing the operating parameters (OP) and/or environmental parameters (WPP) by a trained data-driven model (MO), where the operating parameters (OP) and/or environmental parameters (WPP) are fed as a digital input to the trained data-driven model (MO) and the trained data-driven model (MO) provides the speed prediction (SP) as a digital output;
iii) determining one or more actuator signals (AS) for controlling the wind turbine (10) by post-processing the speed prediction (SP) to prevent a predetermined speed event.

11. The apparatus according to claim 7, wherein the apparatus is configured to perform a method according to one of claims 2 to 9.

12. A wind turbine (10), comprising an upper section (11) on top of a tower, the upper section (11) being pivotable around a vertical yaw axis (VA) and having a nacelle (12) and a rotor (13) with rotor blades, the rotor (13) being attached to the nacelle (12) and the rotor blades being rotatable by wind around a substantially horizontal rotor axis (HA), wherein the wind turbine (10) comprises an apparatus according to claim 11 or 12.

13. A computer program product with program code, which is stored on a non-transitory machine-readable carrier, for carrying out a method according to one of claims 1 to 9 when the program code is executed on a computer.
